# EUROPÄISCHE PATENTSCHRIFT

(11) **EP 4 164 766 B1**
(45) Veröffentlichungstag und Bekanntmachung des Hinweises auf die Patenterteilung: **05.06.2024**
(21) Anmeldenummer: 21734090.0
(22) Anmeldetag: 15.06.2021
(51) Int. Cl.: B01D 29/44, B01D 29/64

(54) **SIEBVORRICHTUNG SOWIE VERFAHREN ZUR EINSTELLUNG DER ZUGSPANNUNG AN EINER SIEBVORRICHTUNG**
SIEVING DEVICE AND METHOD FOR SETTING THE TENSILE STRESS ON A SIEVING DEVICE
DISPOSITIF DE TAMISAGE ET PROCÉDÉ DE RÉGLAGE DE LA CONTRAINTE DE TRACTION SUR UN DISPOSITIF DE TAMISAGE

(30) Priorität: 22.06.2020 DE 102020116332
(43) Veröffentlichungstag der Anmeldung: 19.04.2023
(73) Patentinhaber: Huber SE, 92334 Berching (DE)
(72) Erfinder: BLOMENHOFER, Walter, 92334 Berching/Pollanten (DE)
(74) Vertreter: Canzler & Bergmeier Patentanwälte Partnerschaft mbB
(86) Internationale Anmeldenummer: PCT/EP2021/066124
(87) Internationale Veröffentlichungsnummer: WO 2021/259708

(56) Entgegenhaltungen:
- WO-A1-2014/008390
- KR-B1- 101 031 814
- US-A1- 2007 029 168

## Beschreibung

Die vorliegende Erfindung betrifft ein Verfahren zur Einstellung der Zugspannung von endlosen und zueinander beabstandet angeordneten Antriebselementen einer Siebvorrichtung, die dem Abscheiden und Abtransport von Verunreinigungen aus Abwasser dient, wobei die Antriebselemente während des Betriebs der Siebvorrichtung mit Hilfe wenigstens eines Antriebsmotors der Siebvorrichtung auf einer Umlaufbahn bewegt werden.

Entsprechende Siebvorrichtungen sind im Stand der Technik hinlänglich bekannt und dienen beispielsweise der Entfernung von grobem Siebgut (Holz, Steine, etc.) aus einem in einem Abwasserkanal fließenden Abwasser. Die Siebvorrichtung wird hierzu in der Regel derart in den Abwasserkanal integriert, dass sich die Siebfläche, ausgehend von der Kanalsohle, senkrecht oder leicht geneigt nach oben erstreckt. Um einen Austrag des von dem die Siebfläche bildenden Siebrost zurückgehaltenen Siebguts zu ermöglichen, erstreckt sich die Siebfläche meist über den maximal zu erwartenden Wasserspiegel.

Durch einen Umlaufbetrieb von der Siebfläche zugeordneten Räumelementen in Form sogenannter Reinigungsharken wird schließlich das Siebgut entlang der Vorderseite der Siebfläche nach oben in Richtung eines Abwurfs gefördert und dort, beispielsweise mit Hilfe eines Abstreifers, von dem oder den Reinigungsharken entfernt. Um die Reinigungsharken bewegen zu können, weisen entsprechende Siebvorrichtung einen Antriebsmotor auf, der mit zwei benachbart zueinander verlaufenden Antriebselementen verbunden ist, wobei die Antriebselemente wiederum mit den einzelnen Reinigungsharken in Verbindung stehen. Werden die Antriebselemente mit Hilfe des Antriebsmotors auf einer vorgegebenen Umlaufbahn bewegt, so bewegen sich auch die Reinigungsharken auf dieser Umlaufbahn und damit entlang des Siebrostes.

Eine derartige gattungsgemäße Siebvorrichtung ist beispielsweise im Zusammenhang mit Figur 1 der DE 10 2012 103 058 A1 beschrieben.

Eine weitere gattungsgemäße Siebvorrichtung ist beispielsweise in der DE 10 2004 062 316 A1 offenbart. Die dort gezeigte Vorrichtung besitzt ebenfalls zwei parallel zueinander verlaufende Antriebselemente in Form von Antriebsketten, zwischen denen sich wiederum eine Vielzahl von benachbarten Siebelementen erstreckt. Die Siebelemente weisen jeweils eine nach außen gewölbte Siebfläche auf, durch welche die im Abwasser mitgeführten Verunreinigungen zurückgehalten werden. Alternativ und auch im Rahmen der vorliegenden Erfindung können auch Siebelemente zum Einsatz kommen, die eine im Querschnitt ebene oder zickzack-förmig gekantete Siebfläche aufweisen. Werden die Antriebselemente mit Hilfe eines Antriebsmotors auf ihrer Umlaufbahn bewegt, so gelangen die Verunreinigungen gemeinsam mit den Siebelementen in einen dem oberen Umlenkbereich der Antriebselemente in Förderrichtung nachgeordneten Bereich und werden dort mit Hilfe einer Reinigungsbürste von den Siebelementen gelöst, um letztendlich über einen Abwurf in einen Sammelbehälter, beispielsweise einen Container, zu gelangen. Das von den Verunreinigungen befreite Abwasser passiert die Siebvorrichtung und kann seiner weiteren Verwendung zugeführt werden. Derartige Siebvorrichtungen besitzen somit keinen starr platzierten Siebrost wie die zuerst genannte Siebvorrichtung. Vielmehr wird hier der Abschnitt, welcher die vom Abwasser mitgeführten Verunreinigungen zurückhält, d.h. die genannten Siebelemente, auf einer Umlaufbahn bewegt. Die Siebelemente stehen hier beidseitig mit jeweils einer der Antriebselemente in Verbindung.

Aufgrund der auf die Antriebselemente wirkenden Zugkräfte längen sich diese mit der Zeit. Es ist daher nötig, die Zugspannung der Antriebselemente in regelmäßigen Zeitabständen nachzustellen, um einen zuverlässigen Betrieb der jeweiligen Siebvorrichtung sicherzustellen. Die Einstellung der Zugspannung erfolgt hierbei in der Regel manuell und basierend auf Erfahrungswerten. Eine derartige Einstellung ist jedoch nicht optimal und damit verbesserungswürdig.

Das Dokument WO 2014/008390A1 offenbart ein Verfahren zur Einstellung der Zugspannung von endlosen und zueinander beabstandet angeordneten Antriebselementen einer Siebvorrichtung.

Aufgabe der vorliegenden Erfindung ist es daher, ein Verfahren zur Einstellung der Zugspannung von Antriebselementen einer Siebvorrichtung sowie eine entsprechende Siebvorrichtung vorzuschlagen, die sich in positiver Weise vom bekannten Stand der Technik unterscheiden.

Die Aufgabe wird gelöst durch ein Verfahren sowie eine Siebvorrichtung mit den Merkmalen der unabhängigen Patentansprüche.

Das erfindungsgemäße Verfahren dient der Einstellung der Zugspannung von endlosen und zueinander beabstandet angeordneten Antriebselementen einer Siebvorrichtung. Insbesondere weist die Siebvorrichtung zwei parallel zueinander verlaufende Umlaufbahnen auf, auf denen die Antriebselemente beim Betrieb der Siebvorrichtung bewegt werden (die Umlaufbahnen müssen nicht körperlich vorhanden sein; vielmehr ist unter der Umlaufbahn der Weg gemeint, den die Antriebselemente bei ihrer Bewegung durchlaufen).

Die Antriebselemente sind vorzugsweise mit einzelnen Reinigungsharken oder einzelnen Siebelementen verbunden, wobei die Antriebselemente je nach Ausbildung der Siebvorrichtung entweder die Reinigungsharken oder die Siebelemente bewegen.

Bei den Antriebselementen handelt es sich beispielsweise um Antriebsketten oder Antriebsriemen. Denkbar ist auch, dass die Reinigungsharken oder die Siebelemente beidseitig über Verbindungselemente, z. B. Gelenke, verbunden sind. Die Verbindungselemente können in diesem Fall mit dem Antriebsmotor in Wirkverbindung stehen, so dass jeweils eine Mehrzahl von Verbindungselementen als ein Antriebselement angesehen werden. Ebenso ist es denkbar, dass die Reinigungsharken oder Siebelemente zusätzlich zu den Verbindungselementen nach außen ragende Bolzen aufweisen, die dann mit jeweils einem Antriebsrad in Wirkverbindung stehen. Ein Antriebselement wird in diesem Fall jeweils durch die Verbindungselemente und Bolzen gebildet, die sich auf derselben Seite der Reinigungsharken oder Siebelemente befinden.

Jedes Antriebselement umfasst also vorzugsweise eine Vielzahl von, vorzugsweise relativ zueinander bewegbaren, Einzelelementen, die dann gemeinsam das jeweilige Antriebselement bilden, wobei einzelne oder alle Einzelelemente auch Bestandteil einzelner Reinigungsharken oder Siebelemente sein können.

Die Bewegung der Antriebselemente erfolgt mit Hilfe zumindest eines Antriebsmotors der Siebvorrichtung. Die einzelnen Antriebselemente werden vorzugsweise in einem unteren Bereich und einem oberen Bereich der Siebvorrichtung jeweils mit Hilfe einer Umlenkung, insbesondere einem Antriebsrad, wie beispielsweise einem Kettenrad (andere Bezeichnung: Zahnrad) oder einem glatten Antriebsrad ohne Zähne, geführt, wobei jeweils eines der Antriebsräder, vorzugsweise jeweils das obere Antriebsrad, mit Hilfe eines Antriebsmotors angetrieben wird. Die anzutreibenden Antriebsräder können hierbei mit separaten Antriebsmotoren oder über eine Antriebswelle mit einem gemeinsamen Antriebsmotor verbunden sein.

Die erfindungsgemäße Einstellung der Zugspannung erfolgt nun wie folgt (wobei die folgende Beschreibung auf den Fall ausgelegt ist, dass beide Antriebselemente, oder wenn mehr als zwei Antriebselemente vorhanden sind, sämtliche Antriebselemente, mit einem einzelnen Antriebsmotor angetrieben werden; sind mehrere Antriebsmotoren vorhanden, so gilt die Beschreibung analog für eine oder mehrere der mehreren Antriebsmotoren):

Gemäß der vorliegenden Erfindung wird während des Betriebs des Antriebsmotors dessen Strombedarf überwacht. Unter dem Strombedarf wird die Menge an elektrischer Energie verstanden, die der Antriebsmotor, ausgebildet als Elektromotor, während seines Betriebs benötigt. Der aktuelle Strombedarf bzw. der gemittelte Strombedarf über einen bestimmten Zeitraum lässt sich beispielsweise durch Messen bzw. Überwachen der Stromstärke des den Antriebsmotor erreichenden Stroms ermitteln. Ebenso ist es denkbar, dass die elektrische Leistung des Antriebsmotors überwacht wird. Auch der Lastwinkel des Antriebsmotors kann als Kenngröße für den Strombedarf herangezogen werden.

In jedem Fall wird der Strombedarf über einen definierten Zeitraum, der beispielsweise zwischen 10 Sekunden und 30 Minuten betragen kann, mit Hilfe einer Steuerung der Siebvorrichtung ausgewertet und damit überwacht. Die hierfür notwendigen Messwerte, wie beispielsweise die Stromstärke, werden der Steuerung vorzugsweise über eine oder mehrere Sensoren zur Verfügung gestellt, die ebenfalls Bestandteil der Siebvorrichtung sein sollten. Selbstverständlich kann der Strombedarf auch über einen längeren Zeitraum (mehrere Tage bis zu mehrere Monate) überwacht und vorzugsweise über den Zeitraum gemittelt werden.

Anschließend wird die Zugspannung einer oder vorzugsweise aller Antriebselemente bei Bedarf (d. h. beispielsweise nach einem definierten Zeitraum nach der letzten Erhöhung der Zugspannung, nach einer definierten Betriebszeit der Siebvorrichtung seit einem zuvor festgelegten Ereignis oder unter Berücksichtigung des zuvor ermittelten Stromverbrauchs und/oder weiterer Parameter) um einen gewissen Betrag erhöht. Dies erfolgt insbesondere dadurch, dass der Abstand des jeweiligen oberen und unteren Antriebsrads eines jeweiligen Antriebselements vergrößert wird. Dies kann beispielsweise dadurch bewerkstelligt werden, dass das untere Antriebsrad mit Hilfe einer Gewindespindel oder einem sonstigen Verstellmechanismus relativ zu einem Gestell bzw. Rahmenelement der Siebvorrichtung nach unten und/oder das obere Antriebsrad mit Hilfe einer entsprechenden Gewindespindel nach oben bewegt wird. Nach der Verstellung der Lage des entsprechenden Antriebsrads bzw. dessen Drehachse wird dieses bzw. ein die Drehachse führendes Lager wieder fixiert.

Ebenso ist es denkbar, dass den Antriebselementen jeweils ein Einstellelement mit einem Zahnrad oder einer Gleitfläche zugeordnet ist, welche das entsprechende Antriebselement auslenkt. Je nachdem, wie stark diese Auslegung ist, ändert sich auch die Zugspannung des Antriebselements.

Nachdem die Zugspannung erhöht wurde oder während der Erhöhung der Zugspannung wird erneut der Strombedarf des mit dem entsprechenden Antriebselement in Wirkverbindung stehenden Antriebsmotors ermittelt (wobei die Ermittlung ebenfalls über einen definierten Zeitraum erfolgt, wobei wiederum einzelne Messwerte, die mit dem Strombedarf in Beziehung stehen, wie beispielsweise die Stromstärke, gemittelt werden können). Selbstverständlich ist der Antriebsmotor während der Ermittlung des Strombedarfs aktiviert und bewirkt eine Bewegung einer oder mehrerer Antriebselemente.

Ist der Strombedarf auf zuvor definierte Weise (z. B. um einen bestimmten Betrag oder Prozentsatz oder bis zu oder über einen bestimmten Betrag) angestiegen, so wird dies als Indiz dafür gewertet, dass die Zugspannung um wenigstens den gewünschten Betrag erhöht wurde. Ist ein entsprechender Anstieg nicht zu verzeichnen, so wird die Zugspannung erneut um einen bestimmten Betrag erhöht. Diese Abfolge aus Erhöhung der Zugspannung und Auswertung der eventuell resultierenden Erhöhung des Strombedarfs wird solange durchgeführt, bis eine Erhöhung des Strombedarfs gegenüber dem zu Beginn des Einstellvorgangs ermittelten Strombedarfs detektiert wird, die zuvor festgelegten Vorgaben entspricht.

Durch die Überwachung und Auswertung des Strombedarfs kann also festgestellt werden, ob die Erhöhung der Zugspannung ausreichend war oder ob diese weiter erhöht werden muss, um die gewünschte Zugspannung zu erreichen.

Von Vorteil ist es, wenn der Strombedarf über einen Zeitraum von mehreren Tagen, vorzugsweise von mehreren Wochen, besonders vorzugsweise von mehreren Monaten, kontinuierlich oder in regelmäßigen Zeitabständen ermittelt wird, wobei die Zugspannung erhöht wird, wenn der Strombedarf im Verlauf des Zeitraums auf zuvor definierte Weise gesunken ist. Das Absinken der Zugspannung ist ein Indiz dafür, dass sich die Antriebselemente um einen bestimmten Betrag gelängt haben (während des Betriebs der Siebvorrichtung wirkt eine nicht unbeträchtliche Antriebskraft auf die Antriebselemente, so dass diese sich in ihrer Längsrichtung über die Zeit geringfügig ausdehnen). Sinkt die Zugspannung bezogen auf einen Betrag vor dem genannten Zeitraum um einen bestimmten Betrag oder Prozentsatz oder sinkt die Zugspannung auf oder unter einen bestimmten Betrag, so wird dies dahingehend gewertet, dass die Antriebselemente sich soweit gelängt haben, dass eine Erhöhung der Zugspannung notwendig ist. Die Zugspannung wird in diesem Fall gemäß obiger Beschreibung erhöht.

Eine vorteilhafte Ergänzung der Erfindung sieht folgendes Vorgehen vor: Nach der zuvor beschriebenen Erhöhung der Zugspannung wird die Zugspannung wieder um einen gewissen Betrag verringert und erneut der Strombedarf ermittelt. Wird nun festgestellt, dass der Strombedarf aufgrund der Verringerung der Zugspannung wieder in zuvor definierte Weise gesunken ist, so ist die gewünschte Zugspannung erreicht. Sinkt der Strombedarf hingegen nicht um den gewünschten Betrag, so wird die Zugspannung erneut verringert und der Strombedarf erneut ausgewertet.

Dies wird solange wiederholt, bis der Strombedarf auf zuvor definierte Weise gesunken ist.

Die Zugspannung kann hierbei beispielsweise manuell durch einen Bediener verringert werden, wobei die Verringerung der Zugspannung nicht um einen definierten Betrag erfolgen muss. Vielmehr kann der Bediener die Zugspannung basierend auf seinen Erfahrungen um ein gewisses Stück weit reduzieren. Anschließend wird erneut der Strombedarf ausgewertet.

Im Übrigen sei an dieser Stelle darauf hingewiesen, dass die Siebvorrichtung eine Steuerung aufweisen kann, mit deren Hilfe die Auswertung des jeweiligen Stromverbrauchs erfolgen kann. Die Steuerung kann dem Bediener beispielsweise nach Auswertung des Stromverbrauchs einen Hinweis geben, ob er die Zugspannung erhöhen, verringern oder beibehalten soll, da der richtige Wert erreicht ist. Ebenso ist es auch denkbar, dass die Siebvorrichtung lediglich eine Anzeige aufweist, welche den aktuellen Strombedarf bzw. den über einen bestimmten Zeitraum gemittelten Strombedarf des bzw. der Antriebsmotoren zeigt. Die Auswertung des Strombedarfs dahingehend, ob die Zugspannung erhöht oder verringert werden soll oder ihren gewünschten Wert erreicht hat, würde in diesem Fall dem Bediener obliegen. Beispielsweise wäre es denkbar, dass der Bediener nach einer definierten Erhöhung des Strombedarfs die Zugspannung lediglich wieder um einen bestimmten Betrag reduziert, ohne danach den Stromverbrauch erneut zu berücksichtigen.

Hintergrund des Verfahrens ist in jedem Fall die Erkenntnis, dass der Strombedarf des Antriebsmotors nicht signifikant sinkt oder steigt, wenn die Zugspannung durch Längen der Kette mit der Zeit sinkt. Hingegen steigt der Strombedarf des Antriebsmotors signifikant, wenn die Kette zu stark gespannt wurde. Da dies einen übermäßig hohen Stromverbrauch der Siebvorrichtung und gleichzeitig einen erhöhten Verschleiß der sich bewegenden Bauteile bedeuten würde, ist eine zu hohe Zugspannung in jedem Fall zu vermeiden. Gleichzeitig ist jedoch auch sicherzustellen, dass die Zugspannung nicht unter einen bestimmten Grenzwert sinkt, da es auch hierdurch zu negativen Beeinflussungen des Betriebs der Siebvorrichtung kommen könnte. Die Zugspannung wird also nur so weit gespannt, bis hieraus ein definierter, d. h. auf einen bestimmten Betrag begrenzte Erhöhung des Strombedarfs resultiert, wobei die Zugspannung anschließend wieder ein Stück weit reduziert werden kann.

Das erfindungsgemäße Verfahren stellt nun sicher, dass die Zugspannung auf einen Betrag eingestellt werden kann, der möglichst hoch ist, aber gerade noch unterhalb dem Betrag liegt, der eine ungewollte Erhöhung des Strombedarfs des Antriebsmotors zur Folge hätte.

Besonders vorteilhaft ist es, wenn die Zugspannung nach dem genannten Anstieg des Strombedarfs wieder verringert wird, bis der Strombedarf auf zuvor definierte Weise wieder sinkt. In diesem Fall erfolgt die Verringerung der Zugspannung nicht willkürlich durch den Bediener. Vielmehr dient die Verringerung des Strombedarfs als Indiz dafür, dass die Kette nicht übermäßig gespannt ist.

Ebenso ist es vorteilhaft, wenn die Zugspannung erhöht wird, bis der Strombedarf einen ersten Grenzwert erreicht oder überschreitet. Ein entsprechender Grenzwert ist beispielsweise in der Steuerung der Siebvorrichtung hinterlegt. Ebenso ist es denkbar, dass die Siebvorrichtung dem Bediener lediglich den Strombedarf anzeigt (beispielsweise auf einem Display) und der Bediener den entsprechenden Grenzwert einer Datenbank oder einer entsprechenden Richtlinie, beispielsweise des Kettenherstellers, entnimmt.

Die Zugspannung wird im Rahmen des Verfahrens also entweder kontinuierlich oder schrittweise solange erhöht, bis der genannte Grenzwert erreicht oder überschritten ist. Anschließend wird die Zugspannung wieder reduziert, wobei auch während oder nach der Reduzierung vorzugsweise wieder der Strombedarf ausgewertet wird.

Vorteile bringt es ebenso mit sich, wenn die Zugspannung verringert wird, bis der Strombedarf einen zweiten Grenzwert erreicht oder unterschreitet. Der zweite Grenzwert kann ebenfalls in der Steuerung hinterlegt und von der Steuerung automatisch berücksichtigt werden. Alternativ hierzu ist der Grenzwert dem Bediener bekannt, wobei der Strombedarf, der nach der Verringerung der Zugspannung ermittelt wurde, durch den Bediener mit dem entsprechenden Grenzwert verglichen wird.

Auch ist es von Vorteil, wenn die Zugspannung verringert wird, bis der Strombedarf wieder auf den vor der Erhöhung ermittelten Strombedarf gesunken ist. Wie bereits oben erwähnt, ändert sich der Strombedarf des Antriebsmotors unwesentlich, wenn sich die Kette über die Zeit längt. Der Strombedarf bleibt damit quasi konstant, bis die Zugspannung auf einen bestimmten Wert erhöht wird. Der Strombedarf vor Erhöhung der Zugspannung kann also als Referenzwert herangezogen werden. Steigt der Strombedarf nach Erhöhung der Zugspannung, so ist dies ein Indiz dafür, dass die Zugspannung zu hoch gewählt wurde. Wird eine entsprechende Erhöhung des Strombedarfs vom Bediener oder von der Steuerung erkannt, so wird die Zugspannung wieder soweit reduziert, bis der Strombedarf auf den Referenzwert gesunken ist. Hieraus resultiert schließlich eine optimale Einstellung der Zugspannung.

Des Weiteren ist es vorteilhaft, wenn die Erhöhung der Zugspannung stufenweise erfolgt, und dass nach jeder Erhöhung der Strombedarf des Antriebsmotors gemessen und dahingehend bewertet wird, ob er angestiegen ist. Zwar ist es auch möglich, dass der Strombedarf während der Veränderung der Zugspannung gemessen und gemäß bisheriger Beschreibung analysiert wird. In der Regel müssen jedoch der bzw. die Antriebsmotoren gestoppt werden, bevor eine Änderung der Zugspannung durchgeführt werden kann. In diesem Fall bietet es sich an, die Zugspannung immer nur um einen zuvor definierten Betrag zu ändern und anschließend den oder die Antriebsmotoren wieder zu aktivieren und den Strombedarf zu ermitteln bzw. zu bewerten. Weicht der Strombedarf zu weit von einem zuvor definierten Grenzwert ab, so werden der bzw. die Antriebsmotoren wieder gestoppt und die Zugspannung erneut geändert.

Ebenso bringt es Vorteile mit sich, wenn auch die Verringerung der Zugspannung stufenweise erfolgt, und wenn nach jeder Verringerung der Strombedarf des Antriebsmotors gemessen und dahingehend bewertet wird, ob er gesunken ist. Auch in diesem Fall werden vorzugsweise der oder die Antriebsmotoren zunächst gestoppt. Anschließend wird die Zugspannung ein gewisses Stück reduziert und der oder die Antriebsmotoren anschließend wieder gestartet. Nach dem Starten wird erneut der Strombedarf ermittelt bzw. ausgewertet. Wurde keine Verringerung des Strombedarfs erkannt, die einer definierten Vorgabe (beispielsweise in Form des oben genannten Grenzwerts) entspricht, so wird die Zugspannung erneut verringert.

Ebenso ist es vorteilhaft, wenn die Erhöhung und/oder Verringerung der Zugspannung manuell erfolgt. Jedes Antriebselement wird vorzugsweise um wenigstens zwei Antriebsräder geführt. Der Abstand der Antriebsräder kann beispielsweise mit Hilfe einer Gewindespindel verstellt werden, die von einem Bediener mit Hilfe eines dafür geeigneten Werkzeugs betätigt werden kann.

Besonders vorteilhaft ist es jedoch, wenn die Zugspannung mit Hilfe einer Spanneinrichtung der Siebvorrichtung erfolgt, die mit Hilfe einer Steuerung der Siebvorrichtung automatisch und in Abhängigkeit des jeweils gemessenen Strombedarfs betrieben wird. Beispielsweise könnte die genannte Gewindespindel mit einem Elektromotor in Wirkverbindung stehen, so dass die Gewindespindel durch Aktivierung des Elektromotors in die eine oder andere Richtung gedreht und damit der Abstand zwischen den Antriebsrädern eines Antriebselements verändert wird. Die Gewindespindel greift hierbei beispielsweise in ein Gewinde einer Lagerung eines Antriebsrads ein, so dass eine Drehung der Gewindespindel eine Bewegung der Lagerung des Antriebsrads und damit auch des Antriebsrads selbst bewirkt.

Vorteilhaft ist es zudem, wenn das Verfahren zur Einstellung der Zugspannung in definierten Zeitabständen von der Steuerung und mit Hilfe der Spanneinrichtung automatisch durchgeführt wird. Beispielsweise könnte die Steuerung ausgebildet sein, in definierten Zeitabständen von einem normalen Betriebsmodus, in dem das Abwasser von Verunreinigungen befreit wird, in einen Einstellungsmodus zu wechseln. In diesem Einstellungsmodus wird das erfindungsgemäße Verfahren durchgeführt, wobei die Änderung der Zugspannung mit Hilfe der genannten Spanneinrichtung bewirkt wird. Die Siebvorrichtung stellt also die Zugspannung ihrer Antriebselemente von Zeit zu Zeit selbstständig ein, so dass ein zuverlässiger und verschleißarmer Betrieb der Siebvorrichtung auch über einen langen Zeitraum gewährleistet ist. Ein manuelles Eingreifen während der Einstellung der Zugspannung ist damit nicht zwingend nötig.

Auch ist es äußert vorteilhaft, wenn das Verfahren manuell durch einen Bediener initiiert wird. Es wäre also denkbar, dass die Einstellung der Zugspannung durch das erfindungsgemäße Verfahren sowie mit Hilfe der Steuerung und der Spanneinrichtung automatisch erfolgt. Der Start des Einstellungsvorgangs erfolgt jedoch nicht, wie zuvor beschrieben, automatisch in regelmäßigen Zeitabständen. Vielmehr wird die Zugspannung nur dann automatisch eingestellt, wenn der Einstellvorgang durch den Bediener, beispielsweise über ein Eingabepanel der Siebvorrichtung, manuell gestartet wird. Der Vorteil einer derartigen Betriebsweise liegt darin, dass der Bediener in der Regel aufgrund seiner Erfahrung durch Beobachtung der Siebvorrichtung sehr genau entscheiden kann, wann die Zugspannung neu eingestellt werden muss. Einstellvorgänge, die eigentlich nicht nötig sind, werden hierdurch vermieden.

Des Weiteren wird eine Siebvorrichtung zum Abscheiden und Abtransport von Verunreinigungen aus Abwasser vorgeschlagen, wobei die Siebvorrichtung zumindest zwei endlose und zueinander beabstandet und insbesondere parallel angeordnete Antriebselemente umfasst, die während des Betriebs der Siebvorrichtung mit Hilfe eines Antriebsmotors der Siebvorrichtung auf einer Umlaufbahn bewegbar sind.

Die Siebvorrichtung zeichnet sich dadurch aus, dass sie eine Steuerung umfasst, die ausgebildet ist, den Strombedarf des Antriebsmotors dahingehend auszuwerten, ob er auf zuvor definierte Weise ansteigt, wenn die Zugspannung erhöht wird und/oder ob er auf zuvor definierte Weise sinkt, wenn die Zugspannung verringert wird. Die Siebvorrichtung ist damit geeignet, dass die Zugspannung der Antriebselemente gemäß bisheriger Beschreibung eingestellt werden kann. Insbesondere umfasst die Siebvorrichtung eine oder mehrere Sensoren, mit deren Hilfe der Strombedarf des oder der Antriebsmotoren festgestellt werden kann. Ebenso sollte eine Steuerung vorhanden sein, mit deren Hilfe die Signale des oder der Sensoren ausgewertet werden können.

Besonders vorteilhaft ist es, wenn die Siebvorrichtung wenigstens ein Siebsystem mit beweglichen Bauteilen zum Entfernen von Verunreinigungen aus dem Abwasser aufweist, wobei die beweglichen Bauteile mit den beiden Antriebselementen in Verbindung stehen, so dass sie gemeinsam mit den Antriebselementen entlang der Umlaufbahn bewegt werden, wenn die Antriebselemente mit Hilfe des Antriebsmotors bewegt werden. Bei den beweglichen Bauteilen kann es sich beispielsweise um Reinigungsharken handeln, die jeweils gleichzeitig mit einem Antriebselement verbunden sind. Wenn die Antriebselemente mit Hilfe des oder der Antriebsmotoren auf ihrer Umlaufbahn bewegt werden, so werden auch die Reinigungsharken bewegt.

Die Siebvorrichtung umfasst vorzugsweise einen Siebrost, mit dessen Hilfe Verunreinigungen des zu reinigenden Abwassers zurückgehalten werden können. Die Reinigungsharken werden beim Betrieb der Siebvorrichtung entlang des Siebrosts geführt und übernehmen hierbei vom Siebrost zurückgehaltene Verunreinigungen. Durch Bewegung der Reinigungsharken werden die Verunreinigungen schließlich vom Siebrost entfernt und können über einen Abwurf aus der Siebvorrichtung ausgeführt werden.

Ebenso ist es denkbar, dass die Siebvorrichtung bewegliche Bauteile in Form von einzelnen Siebelementen umfasst, die wiederum mit den Antriebselementen in Verbindung stehen. Die Siebelemente dienen hierbei ähnlich wie der zuvor genannte Siebrost dem Zurückhalten von Verunreinigungen, die vom Abwasser mitgeführt werden. Werden die Antriebselemente mit Hilfe des oder der Antriebsmotoren bewegt, so werden auch die Siebelemente bewegt und gelangen hierbei schließlich in einem oberen Bereich der Siebvorrichtung in den Wirkbereich einer Reinigungsbürste, welche die Verunreinigungen von den Siebelementen entfernt.

Ebenso ist es vorteilhaft, wenn die Siebvorrichtung eine Signalisierungseinheit aufweist, mit deren Hilfe einem Bediener der Siebvorrichtung signalisierbar ist, dass der Strombedarf des Antriebsmotors auf zuvor definierte Weise angestiegen ist, nachdem die Zugspannung erhöht wurde und/oder dass der Strombedarf des Antriebsmotors auf zuvor definierte Weise gesunken ist, nachdem die Zugspannung verringert wurde. Die Signalisierungseinheit kann beispielsweise ein Display oder eine Signallampe umfassen. Mit Hilfe der Signalisierungseinheit kann der Bediener schließlich erkennen, ob er die Zugspannung nach einer anfänglichen Erhöhung weiter erhöhen oder wieder reduzieren muss. Auch ist es denkbar, dass die Signalisierungseinheit den Bediener ein Hinweis dahingehend gibt, um welchen Betrag die Zugspannung verändert werden soll.

Ebenso bringt es Vorteile mit sich, wenn die Siebvorrichtung eine Spanneinrichtung aufweist, die ausgebildet ist, die Zugspannung der Antriebselemente zu erhöhen oder zu verringern. Vorzugsweise ist jedes Antriebselement um ein unteres und ein oberes Antriebsrad geführt. Die Spanneinrichtung umfasst vorzugsweise Elemente, mit deren Hilfe der Abstand der Antriebsräder eines Antriebselement verändert werden kann. Vorzugsweise stehen die Elemente mit einer Lagerung der Drehachse der oberen Antriebsräder in Wirkverbindung. Die Elemente können beispielsweise eine oder mehrere Gewindespindeln oder auch einen oder mehrere Elektromotoren umfassen, mit deren Hilfe die Lagerung in ihrer räumlichen Lage verändert werden kann.

Ebenso ist es vorteilhaft, wenn die Spanneinrichtung mit der Steuerung in Wirkverbindung steht, wobei die Steuerung ausgebildet ist, die Zugspannung durch Betätigung der Spanneinrichtung im Rahmen der Einstellung der Zugspannung zu erhöhen, bis der Strombedarf des Antriebsmotors auf zuvor definierte Weise ansteigt. Ebenso sollte die Steuerung ausgebildet sein, die Zugspannung durch Betätigung der Spanneinrichtung anschließend wieder zu verringern, bis der Strombedarf auf zuvor definierte Weise wieder sinkt. Die Zugspannung kann hierbei stufenweise oder kontinuierlich und unter ständiger Berücksichtigung des aktuellen Strombedarfs verändert werden.

Ferner sei darauf hingewiesen, dass die im Zusammenhang mit dem erfindungsgemäßen Verfahren genannten körperlichen Merkmale auch bei der erfindungsgemäßen Siebvorrichtung realisiert werden können. Ebenso können Verfahrensmerkmale, die im Zusammenhang mit der Siebvorrichtung beschrieben wurden, im Rahmen des zu anfangs genannten erfindungsgemäßen Verfahren verwirklicht werden. Schließlich sei darauf hingewiesen, dass auch die in der nachfolgenden Figurenbeschreibung genannten Merkmale einzeln oder in beliebiger Kombination Teil des erfindungsgemäßen Verfahrens bzw. der erfindungsgemäßen Siebvorrichtung sein können.

Weitere Vorteile der Erfindung sind in den nachfolgenden Ausführungsbeispielen beschrieben. Es zeigen, jeweils schematisch:
- **Figur 1**: eine Seitenansicht einer erfindungsgemäßen Siebvorrichtung,
- **Figur 2**: eine Seitenansicht einer weiteren erfindungsgemäßen Siebvorrichtung,
- **Figur 3**: eine Seitenansicht einer alternativen Ausführung der in Figur 1 gezeigten Siebvorrichtung, und
- **Figur 4**: eine Seitenansicht einer weiteren erfindungsgemäßen Siebvorrichtung.

Vorab sei erwähnt, dass in Figuren, die mehrere gleichartige Bauteile oder Abschnitte (wie beispielsweise Reinigungsharken 11) zeigen, nur eines von mehreren gleichartigen Bauteilen bzw. Abschnitten mit Bezugszeichen versehen ist, um eine gute Übersichtlichkeit zu gewährleisten.

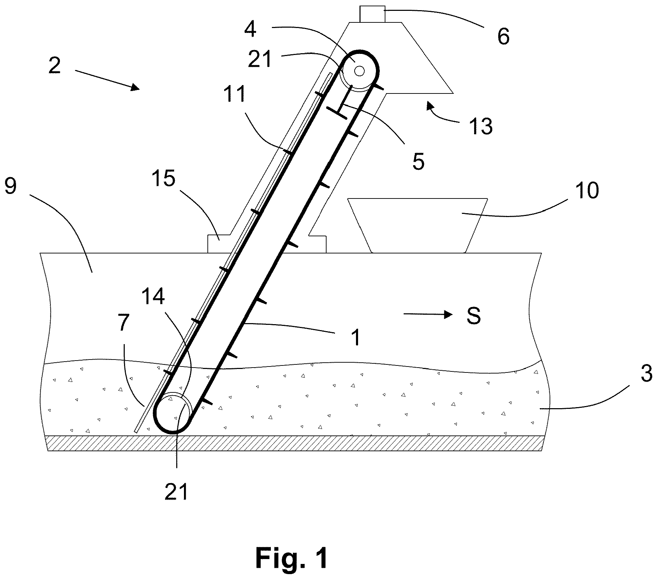

Figur 1 zeigt eine in einen Abwasserkanal 9 integrierte erfindungsgemäße Siebvorrichtung 2 (hier in Form eines so genannten Siebrechens) zum Abscheiden und Entfernen von Verunreinigungen 17 in Form von Siebgut (z. B Steine, Äste, etc.), wobei die Verunreinigungen 17 nicht in allen Figuren gezeigt sind. Die Siebvorrichtung 2 weist einen schräg von oben in das Abwasser 3 hineinragenden Siebrost 7 auf, der beispielsweise durch nicht gezeigte Befestigungselemente mit der Abwasserkanalsohle, der Abwasserkanalseitenwand und/oder einem Gestell 15 der Siebvorrichtung 2 verbunden ist.

Rein der Vollständigkeit halber sei darauf hingewiesen, dass die Siebvorrichtung 2 selbstverständlich auch einen Siebrost 7 aufweisen kann, der um 90° verdreht in den Abwasserkanal 9 eingebaut ist. Das Abwasser 3 wird in diesem Fall bezogen auf die Strömungsrichtung S seitlich abgelenkt und durchströmt den Siebrost 7 schräg zur eigentlichen Strömungsrichtung S.

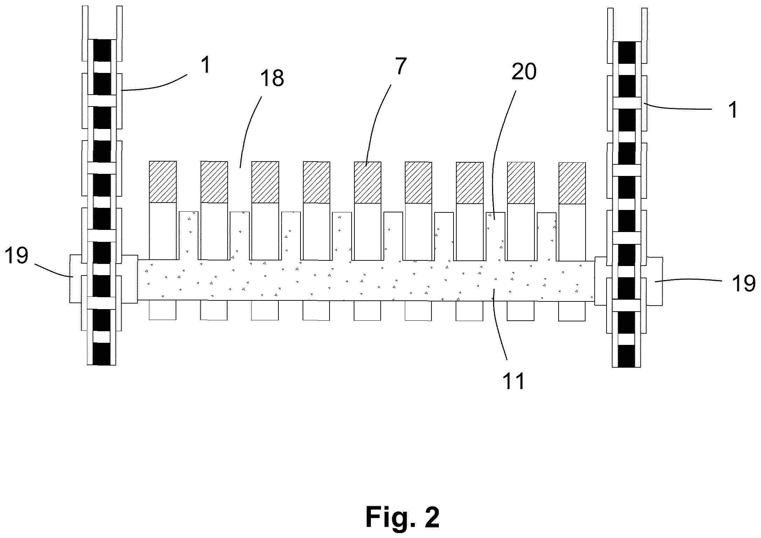

Ferner weist die Siebvorrichtung 2 zwei bezogen auf die Blattebene hintereinander angeordnete, voneinander beabstandete und mit Hilfe eines Antriebsmotors 4 umlaufend auf einer Umlaufbahn bewegbare Antriebselemente 1 auf, vorzugsweise in Form von Antriebsketten oder Antriebsriemen, die über mehrere dazwischenliegende Reinigungsharken 11 miteinander in Verbindung stehen (unter Umständen kann auch nur eine Reinigungsharke 11 ausreichend sein). Eine Draufsicht auf einen Ausschnitt des Siebrosts 7 (geschnitten) sowie die mit den Reinigungsharken 11 verbundenen Antriebselemente 1 (ebenfalls nur ausschnittsweise gezeigt) ist Figur 2 zu entnehmen. Die Reinigungsharken 11 sind beispielsweise mit jeweils einer Befestigung 19 mit den Antriebselementen 1 verbunden.

Die Antriebselemente 1 sind beispielsweise über nicht gezeigte seitliche Führungen auf ihrer Umlaufbahn geführt, wobei die Führung im oberen und unteren Umlenkbereich, aber auch in den dazwischenliegenden Bereichen platziert sein kann, in denen die Antriebselemente 1 parallel zueinander verlaufen. Die Umlenkbereiche werden vorzugsweise durch jeweils ein unteres und ein oberes Antriebsrad 21 gebildet, die über entsprechende Drehachsen am Gestell 15 der Siebvorrichtung 2 gelagert sind. Die Antriebsräder 21 (beispielsweise in Form von Kettenrädern) sind nicht separat dargestellt. Sie befinden sich jedoch im Bereich der unteren Umlenkung 14 sowie des im oberen Bereich angeordneten Antriebsmotors 4.

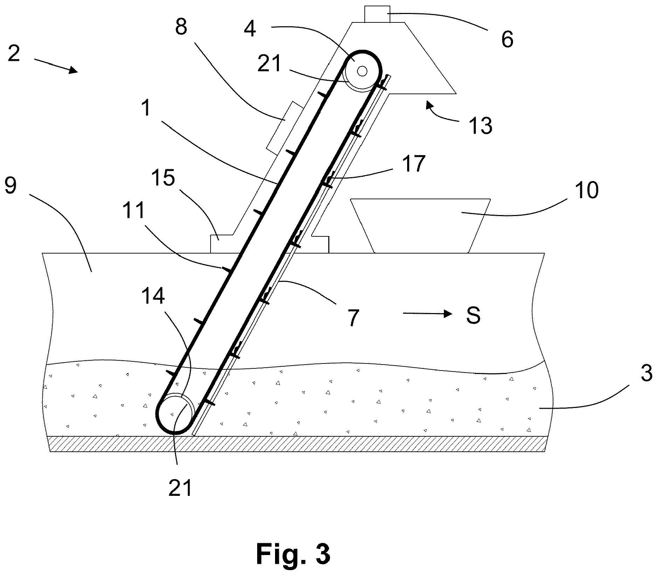

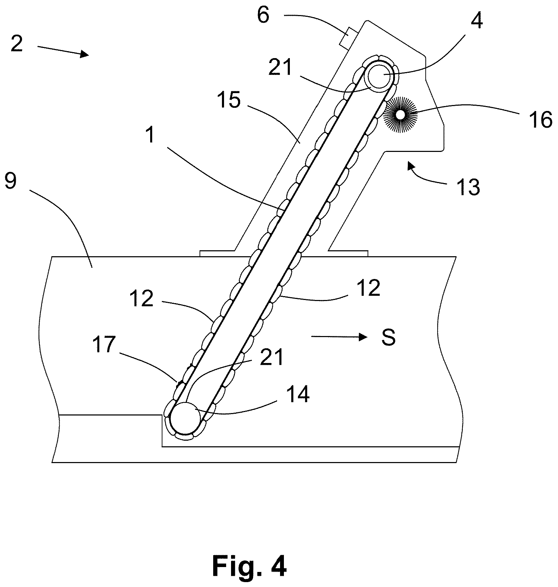

Jede Reinigungsharke 11 umfasst wiederum eine Vielzahl von nebeneinander angeordneten Reinigungszinken 20 (siehe Figur 2), die in die Zwischenräume 18 des Siebrosts 7 eingreifen, wenn sich die Reinigungsharke 11 durch Antreiben der Antriebselemente 1 in Förderrichtung (bezogen auf die Figuren 1 und 4 im und bezogen auf Figur 3 entgegen dem Uhrzeigersinn) an der stromaufwärts gerichteten Vorderseite des Siebrosts 7 vorbeistreicht.

Das vom Siebrost 7 zurückgehaltene Siebgut (die Strömungsrichtung des Abwassers verläuft in Figur 1, 3 und 4 von links nach rechts) wird schließlich von den Reinigungsharken 11 bzw. deren Reinigungszinken 20 erfasst und nach oben gefördert. Nach dem Passieren des oberen Umlenkbereichs gelangt es schließlich in den Bereich eines Abwurfs 13 und von dort nach außen, beispielsweise in einen Container 10. Die Reinigungsharke 11 wird schließlich wieder zum unteren Umlenkbereich im Bereich der unteren Umlenkung 14 geführt, so dass der Kreislauf von vorne beginnen kann.

Wie Figur 3 zeigt, muss der Siebrost 7 nicht zwangsläufig von hinten (in Strömungsrichtung des Abwassers 3 gesehen) von den Reinigungsharken 11 durchkämmt werden. Ebenso ist die in Figur 3 gezeigte Ausführungsform denkbar, bei der der Siebrost 7 "von vorne" durchkämmt wird. Die in den Figuren 1 und 3 gezeigten Ausführungsformen stellen lediglich mögliche Ausführungsformen der erfindungsgemäßen Siebvorrichtung 2 dar.

Eine weitere Ausführungsform ist in Figur 4 gezeigt. Im Gegensatz zu den Ausführungsformen gemäß den Figuren 1 und 3 ist hier der Abschnitt, der die Verunreinigungen 17 des Abwassers 3 zurückhält, nicht starr, sondern beweglich angeordnet. So erstreckt sich zwischen den beiden Antriebselementen 1 eine Vielzahl von senkrecht zur Blattebene verlaufenen Siebelementen 12, die jeweils beidseitig mit den Antriebselementen 1 verbunden sind und jeweils vorzugsweise einen nach außen gerichteten und nach außen gewölbten Siebflächenabschnitt aufweisen. Alternativ können auch Siebelemente 12 zum Einsatz kommen, die im Querschnitt ebene oder zickzack-förmig gekantete Siebflächenabschnitte aufweisen. Der Siebflächenabschnitt kann beispielsweise durch eine entsprechend gebogene und eine Vielzahl von Sieböffnungen aufweisende Metallfläche gebildet sein. Die Summe der einzelnen Siebflächenabschnitte bildet schließlich die Siebfläche der Siebvorrichtung 2.

Während des Betriebs der Siebvorrichtung 2 werden die Antriebselemente 1 jeweils, beispielsweise über zwei parallel zueinander angeordnete, obere Antriebsräder 21 und zwei ebenfalls parallel zueinander angeordnete untere Antriebsräder 21, die um entsprechende Drehachsen drehbar sind, auf einer endlosen Umlaufbahn geführt, wobei die Bewegung der Antriebselemente 1 mit Hilfe eines beispielsweise in einem oberen Umlenkbereich angeordneten Antriebsmotors 4 (z. B. einem Elektromotor) erfolgen kann.

Während des Siebvorgangs kann das Abwasser 3 die Sieböffnungen der Siebelemente 12 passieren, während die vom Abwasser 3 mitgeführten Verunreinigungen 17 von den Siebelementen 12 zurückgehalten werden. Die Siebelemente 12 und damit auch zurückgehaltenen Verunreinigungen 17 gelangen schließlich nach dem Passieren des oberen Umlenkbereichs in den Wirkbereich einer Reinigungsbürste 16, mit der die Verunreinigungen 17 von den Siebelementen 12 abgestreift werden.

Die von den Siebelementen 12 abgelösten Verunreinigungen 17 gelangen schließlich über den Abwurf 13 nach außen und können z. B. in einem entsprechenden (nicht gezeigten) Auffangbehälter gesammelt werden.

In sämtlichen Ausführungen ist es nun wichtig, dass die Zugspannung der Antriebselemente 1, d.h. die Zugspannung, die auf die einzelnen Kettenglieder wirkt, auf einen korrekten Wert eingestellt ist.

Wie Figur 1 beispielhaft zu entnehmen ist, ist hierfür eine Spanneinrichtung 5 vorgesehen, mit deren Hilfe sich der Abstand zwischen jeweils einem oberen und einem unteren Antriebsrad 21 (die beide einem gemeinsamen Antriebselement 1 zugeordnet sind) einstellen lässt. Beispielsweise wäre es in diesem Zusammenhang denkbar, dass die beiden oberen Antriebsräder 21 über eine gemeinsame Antriebsachse mit dem Antriebsmotor 4 verbunden sind. Die Antriebsachse ist hierbei mit Hilfe von Lagern am Gestell 15 gelagert. Sind nun die Lager mit Hilfe von Gewindespindeln an einem Gegenlager starr mit dem Gestell 15 verbundenen Gegenlager verbunden, so können die Lager, wenn sie entsprechend beweglich montiert sind, durch Bewegung der Gewindespindeln in Richtung des unteren Antriebsrads 21 oder in die entgegengesetzte Richtung bewegt werden. Hierdurch ist es möglich, den Abstand der beiden Antriebsräder 21 zueinander einzustellen und damit die Zugspannung zu verändern.

Vorzugsweise umfasst die Spanneinrichtung 5 einen Elektromotor, mit dessen Hilfe der Abstand zwischen den genannten Antriebsrädern 21, beispielsweise durch Drehen der genannten Gewindespindeln, verstellt werden kann.

Ferner weist die Siebvorrichtung 2 eine Steuerung 6 auf, mit deren Hilfe der Antriebsmotor 4 sowie, falls vorhanden, der genannte Elektromotor, aktivierbar und deaktivierbar oder bezüglich seiner Drehzahl regelbar ist.

Ferner umfasst die Siebvorrichtung 2 eine oder mehrere nicht gezeigte Sensoren, mit deren Hilfe sich der Strombedarf des Antriebsmotors 4 erfassen lässt. Beispielsweise kann der Sensor ausgebildet sein, die Stromstärke des den Antriebsmotor 4 erreichenden Stroms zu detektieren.

Erfindungsgemäß ist nun vorgesehen, dass die Steuerung 6 ausgebildet ist, die Spanneinrichtung 5 in Abhängigkeit des Strombedarfs des Antriebsmotors 4 zu betätigen. Insbesondere sollte in der Steuerung 6 ein entsprechender Kettenspann-Modus hinterlegt sein, der entweder manuell durch einen Bediener oder in regelmäßigen Zeitabständen von der Steuerung 6 automatisch aktiviert wird.

Im Rahmen des Kettenspann-Modus wird nun zunächst der aktuelle Strombedarf des Antriebsmotors 4 während eines definierten Zeitraums von der Steuerung 6 registriert. Anschließend wird mit Hilfe der Spanneinrichtung 5 der Abstand zwischen den beiden Antriebsrädern 21 ein Stück weit vergrößert, wodurch die Zugspannung erhöht wird. Anschließend wird der Strombedarf erneut detektiert und dahingehend ausgewertet, ob er sich gegenüber dem ursprünglichen Strombedarf im zuvor definierter Weise erhöht hat (beispielsweise, ob er einen bestimmten Grenzwert erreicht oder überschritten hat). Ist dies nicht der Fall, so wird die Zugspannung erneut um einen gewissen Betrag erhöht.

Sobald der Strombedarf auf die zuvor definierte Weise nach einer Erhöhung der Zugspannung gestiegen ist, ist dies ein Zeichen für die Steuerung 6, dass die Zugspannung zu stark erhöht wurde. Die Steuerung 6 veranlasst nun die Spanneinrichtung 5, die Zugspannung wieder ein Stück weit zu verringern. Nach der Verringerung der Zugspannung wird der Strombedarf erneut von der Steuerung 6 ausgewertet. Bewirkt die Verringerung der Zugspannung eine definierte Verringerung des Strombedarfs, so ist die Einstellung der Zugspannung beendet. Sinkt der Strombedarf hingegen nicht in der gewünschten Weise nach einer Änderung der Zugspannung, so wird die Zugspannung erneut ein Stück weit reduziert, bis der gewünschte Strombedarf erreicht ist.

Alternativ zu einer automatischen Einstellung der Zugspannung kann auch vorgesehen sein, dass die Siebvorrichtung 2 dem Bediener lediglich mit Hilfe einer Signalisierungseinheit 8 das Zeichen gibt, dass die Zugspannung erhöht oder verringert werden muss. Im Anschluss daran verändert der Bediener die Zugspannung mit Hilfe der dann vorzugsweise manuell betätigbaren Spanneinrichtung 5. Anschließend wird der Strombedarf erneut ausgewertet, worauf hin die Steuerung 6 dem Bediener mit Hilfe der Signalisierungseinheit 8 signalisiert, ob die Einstellung der Zugspannung beendet ist, oder ob die Zugspannung weiter erhöht oder verringert werden muss. Die Spanneinrichtung 5 und die Signalisierungseinheit 8 sind jeweils lediglich in einem der Ausführungsbeispiele gezeigt. Selbstverständlich können diese auch einzeln oder in Kombination bei den übrigen Ausführungsbeispielen vorhanden sein.

Die vorliegende Erfindung ist nicht auf die dargestellten und beschriebenen Ausführungsbeispiele beschränkt.

### Bezugszeichenliste

- 1: Antriebselement
- 2: Siebvorrichtung
- 3: Abwasser
- 4: Antriebsmotor
- 5: Spanneinrichtung
- 6: Steuerung
- 7: Siebrost
- 8: Signalisierungseinheit
- 9: Abwasserkanal
- 10: Container
- 11: Reinigungsharke
- 12: Siebelemente
- 13: Abwurf
- 14: Umlenkung
- 15: Gestell
- 16: Reinigungsbürste
- 17: Verunreinigungen
- 18: Zwischenraum
- 19: Befestigung
- 20: Reinigungszinke
- 21: Antriebsrad
- S: Strömungsrichtung

## Patentansprüche

1. Verfahren zur Einstellung der Zugspannung von endlosen und zueinander beabstandet angeordneten Antriebselementen (1) einer Siebvorrichtung (2), die dem Abscheiden und Abtransport von Verunreinigungen (17) aus Abwasser (3) dient, wobei die Antriebselemente (1) während des Betriebs der Siebvorrichtung (2) mit Hilfe wenigstens eines Antriebsmotors (4) der Siebvorrichtung (2) auf einer Umlaufbahn bewegt werden, **dadurch gekennzeichnet, dass** während des Betriebs des Antriebsmotors (4) dessen Strombedarf überwacht wird, und dass die Zugspannung bei Bedarf erhöht wird, bis der Strombedarf auf zuvor definierte Weise ansteigt.

2. Verfahren gemäß dem vorangegangenen Anspruch, **dadurch gekennzeichnet, dass** der Strombedarf über einen Zeitraum von mehreren Tagen, vorzugsweise von mehreren Wochen, besonders vorzugsweise von mehreren Monaten, kontinuierlich oder in regelmäßigen Zeitabständen ermittelt wird, wobei die Zugspannung erhöht wird, wenn der Strombedarf im Verlauf des Zeitraums auf zuvor definierte Weise gesunken ist.

3. Verfahren gemäß einem der vorangegangenen Ansprüche, **dadurch gekennzeichnet, dass** die Zugspannung wieder verringert wird, nachdem der Strombedarf gemäß einem der vorangegangenen Ansprüche angestiegen ist.

4. Verfahren gemäß dem vorangegangenen Anspruch, **dadurch gekennzeichnet, dass** die Zugspannung nach dem genannten Anstieg des Strombedarfs wieder verringert wird, bis der Strombedarf auf zuvor definierte Weise wieder sinkt.

5. Verfahren gemäß einem der vorangegangenen Ansprüche, **dadurch gekennzeichnet, dass** die Zugspannung erhöht wird, bis der Strombedarf einen ersten Grenzwert erreicht oder überschreitet, und/oder dass die Zugspannung verringert wird, bis der Strombedarf einen zweiten Grenzwert erreicht oder unterschreitet.

6. Verfahren gemäß einem der vorangegangenen Ansprüche, **dadurch gekennzeichnet, dass** die Zugspannung verringert wird, bis der Strombedarf wieder auf den vor der Erhöhung ermittelten Strombedarf gesunken ist.

7. Verfahren gemäß einem der vorangegangenen Ansprüche, **dadurch gekennzeichnet, dass** die Erhöhung der Zugspannung stufenweise erfolgt, und dass nach jeder Erhöhung der Strombedarf des Antriebsmotors (4) gemessen und dahingehend bewertet wird, ob er angestiegen ist.

8. Verfahren gemäß einem der vorangegangenen Ansprüche, **dadurch gekennzeichnet, dass** die Verringerung der Zugspannung stufenweise erfolgt, und dass nach jeder Verringerung der Strombedarf des Antriebsmotors (4) gemessen und dahingehend bewertet wird, ob er gesunken ist.

9. Verfahren gemäß einem der vorangegangenen Ansprüche, **dadurch gekennzeichnet, dass** die Erhöhung und/oder Verringerung der Zugspannung manuell oder mit Hilfe einer Spanneinrichtung (5) der Siebvorrichtung (2) erfolgt, die mit Hilfe einer Steuerung (6) der Siebvorrichtung (2) automatisch und in Abhängigkeit des jeweils gemessenen Strombedarfs betrieben wird.

10. Verfahren gemäß dem vorangegangenen Anspruch, **dadurch gekennzeichnet, dass** das Verfahren zur Einstellung der Zugspannung in definierten Zeitabständen von der Steuerung (6) und mit Hilfe der Spanneinrichtung (5) automatisch durchgeführt wird, und/oder dass das Verfahren manuell durch einen Bediener initiiert wird.

11. Siebvorrichtung (2) zum Abscheiden und Abtransport von Verunreinigungen (17) aus Abwasser (3), wobei die Siebvorrichtung (2) zumindest zwei endlose und zueinander beabstandet angeordnete Antriebselemente (1) umfasst, die während des Betriebs der Siebvorrichtung (2) mit Hilfe wenigstens eines Antriebsmotors (4) der Siebvorrichtung (2) auf einer Umlaufbahn bewegbar sind,
**dadurch gekennzeichnet,**
**dass** die Siebvorrichtung (2) eine Steuerung (6) umfasst, die ausgebildet ist, den Strombedarf des Antriebsmotors (4) dahingehend auszuwerten, ob er auf zuvor definierte Weise ansteigt, wenn die Zugspannung erhöht wird und/oder ob er auf zuvor definierte Weise sinkt, wenn die Zugspannung verringert wird, um die Zugspannung gemäß einem der vorangegangenen Ansprüche einstellen zu können.

12. Siebvorrichtung (2) gemäß dem vorangegangenen Anspruch, **dadurch gekennzeichnet, dass** die Siebvorrichtung (2) wenigstens ein Siebsystem mit beweglichen Bauteilen (11; 12) zum Entfernen von Verunreinigungen (17) aus dem Abwasser (3) aufweist, wobei die beweglichen Bauteile (11; 12) mit den beiden Antriebselementen (1) in Verbindung stehen, so dass sie gemeinsam mit den Antriebselementen (1) entlang der Umlaufbahn bewegt werden, wenn die Antriebselemente (1) mit Hilfe des Antriebsmotors (4) bewegt werden.

13. Siebvorrichtung (2) gemäß einem der vorangegangenen Vorrichtungsansprüche, **dadurch gekennzeichnet, dass** die Siebvorrichtung (2) eine Signalisierungseinheit (8) aufweist, mit deren Hilfe einem Bediener der Siebvorrichtung (2) signalisierbar ist, dass der Strombedarf des Antriebsmotors (4) auf zuvor definierte Weise angestiegen ist, nachdem die Zugspannung erhöht wurde und/oder dass der Strombedarf des Antriebsmotors (4) auf zuvor definierte Weise gesunken ist, nachdem die Zugspannung verringert wurde.

14. Siebvorrichtung (2) gemäß einem der vorangegangenen Vorrichtungsansprüche, **dadurch gekennzeichnet, dass** die Siebvorrichtung (2) eine Spanneinrichtung (5) aufweist, die ausgebildet ist, die Zugspannung der Antriebselemente (1) zu erhöhen oder zu verringern.

15. Siebvorrichtung (2) gemäß dem vorangegangenen Anspruch, **dadurch gekennzeichnet, dass** die Spanneinrichtung (5) mit der Steuerung (6) in Wirkverbindung steht, wobei die Steuerung (6) ausgebildet ist, die Zugspannung durch Betätigung der Spanneinrichtung (5) im Rahmen der Einstellung der Zugspannung zu erhöhen, bis der Strombedarf des Antriebsmotors (4) auf zuvor definierte Weise ansteigt, und wobei die Steuerung (6) ausgebildet ist, die Zugspannung durch Betätigung der Spanneinrichtung (5) anschließend wieder zu verringern, bis der Strombedarf auf zuvor definierte Weise wieder sinkt.

## Claims

1. A method for adjusting the tension of endless and spaced-apart drive elements (1) of a screening device (2), which is used for separating out and removing debris (17) from wastewater (3), wherein the drive elements (1) are moved on a circulating path with the aid of at least one drive motor (4) of the screening device (2) during the operation of the screening device (2), **characterized in that** the energy consumption of the drive motor (4) is monitored during the operation thereof, and the tension is increased as necessary until the energy consumption increases in a previously defined way.

2. The method of the preceding claim, **characterized in that** the energy consumption is ascertained continuously or at regular time intervals over a period of time of multiple days, preferably of multiple weeks, particularly preferably of multiple months, wherein the tension is increased when the energy consumption has decreased over the course of the period of time in a previously defined way.

3. The method of one of the preceding claims, **characterized in that** the tension is reduced again after the energy consumption has increased according to one of the preceding claims.

4. The method of the preceding claim, **characterized in that** the tension is reduced again after the aforementioned increase of the energy consumption until the energy consumption decreases again in a previously defined way.

5. The method of one of the preceding claims, **characterized in that** the tension is increased until the energy consumption reaches or exceeds a first limiting value and/or the tension is reduced until the energy consumption reaches or falls below a second limiting value.

6. The method of one of the preceding claims, **characterized in that** the tension is reduced until the energy consumption has decreased again to the energy consumption ascertained prior to the increase.

7. The method of one of the preceding claims, **characterized in that** the tension is increased in a stepwise manner, and, after each increase, the energy consumption of the drive motor (4) is measured and evaluated to determine whether the energy consumption has increased.

8. The method of one of the preceding claims, **characterized in that** the tension is reduced in a stepwise manner, and, after each reduction, the energy consumption of the drive motor (4) is measured and evaluated to determine whether the energy consumption has decreased.

9. The method of one of the preceding claims, **characterized in that** the tension is increased and/or reduced manually or with the aid of a tensioning device (5) of the screening device (2), which is operated with the aid of a controller (6) of the screening device (2) automatically and as a function of the particular measured energy consumption.

10. The method of the preceding claim, **characterized in that** the method for adjusting the tension is carried out automatically at defined time intervals by the controller (6) and with the aid of the tensioning device (5) and/or the method is initiated manually by an operator.

11. A screening device (2) for separating out and removing debris (17) from wastewater (3), wherein the screening device (2) includes at least two endless and spaced-apart drive elements (1), which are movable on a circulating path with the aid of at least one drive motor (4) of the screening device (2) during the operation of the screening device (2),
**characterized in that**
the screening device (2) includes a controller (6), which is designed for evaluating the energy consumption of the drive motor (4) to determine whether the energy consumption increases in a previously defined way when the tension is increased and/or whether the energy consumption decreases in a previously defined way when the tension is reduced, in order to be able to adjust the tension according to one of the preceding claims.

12. The screening device (2) of the preceding claim, **characterized in that** the screening device (2) has at least one screening system that includes movable components (11; 12) for removing debris (17) from the wastewater (3), wherein the movable components (11; 12) are connected to the two drive elements (1), so that the components (11; 12) are moved along the circulating path together with the drive elements (1) when the drive elements (1) are moved with the aid of the drive motor (4).

13. The screening device (2) of one of the preceding device claims, **characterized in that** the screening device (2) includes a signaling unit (8), with the aid of which an operator of the screening device (2) may be signaled that the energy consumption of the drive motor (4) has increased in a previously defined way after the tension was increased and/or the energy consumption of the drive motor (4) has decreased in a previously defined way after the tension was reduced.

14. The screening device (2) of one of the preceding device claims, **characterized in that** the screening device (2) includes a tensioning device (5), which is designed for increasing or reducing the tension of the drive elements (1).

15. The screening device (2) of the preceding claim, **characterized in that** the tensioning device (5) is operatively connected to the controller (6), wherein the controller (6) is designed for increasing the tension by actuating the tensioning device (5) within the scope of the adjustment of the tension until the energy consumption of the drive motor (4) increases in a previously defined way, and wherein the controller (6) is designed for subsequently reducing the tension again by actuating the tensioning device (5) until the energy consumption decreases again in a previously defined way.

## Revendications

1. Procédé de réglage de la tension de traction d'éléments d'entraînement (1) sans fin et disposés à distance les uns des autres d'un dispositif de tamisage (2) qui sert à séparer et à évacuer des impuretés (17) d'eau résiduaire (3), les éléments d'entraînement (1) étant déplacés sur une trajectoire pendant le fonctionnement du dispositif de tamisage (2) à l'aide d'au moins un moteur d'entraînement (4) du dispositif de tamisage (2), **caractérisé en ce que** pendant le fonctionnement du moteur d'entraînement (4), sa demande en courant est surveillée, et **en ce que** la tension de traction est augmentée si nécessaire jusqu'à ce que la demande en courant augmente d'une manière prédéfinie.

2. Procédé selon la revendication précédente, **caractérisé en ce que** la demande en courant est déterminée en continu ou à intervalles de temps réguliers sur une période de plusieurs jours, de préférence de plusieurs semaines, de manière particulièrement préférée de plusieurs mois, la tension de traction étant augmentée si la demande en courant a diminué d'une manière prédéfinie au cours de la période.

3. Procédé selon l'une quelconque des revendications précédentes, **caractérisé en ce que** la tension de traction est à nouveau réduite après que la demande en courant a augmenté selon l'une quelconque des revendications précédentes.

4. Procédé selon la revendication précédente, **caractérisé en ce que** la tension de traction est à nouveau réduite après ladite augmentation de la demande en courant jusqu'à ce que la demande en courant diminue à nouveau d'une manière prédéfinie.

5. Procédé selon l'une quelconque des revendications précédentes, **caractérisé en ce que** la tension de traction est augmentée jusqu'à ce que la demande en courant atteigne ou dépasse une première valeur limite, et/ou **en ce que** la tension de traction est réduite jusqu'à ce que la demande en courant atteigne ou devienne inférieure à une deuxième valeur limite.

6. Procédé selon l'une quelconque des revendications précédentes, **caractérisé en ce que** la tension de traction est réduite jusqu'à ce que la demande en courant ait à nouveau diminué jusqu'à la demande en courant déterminée avant l'augmentation.

7. Procédé selon l'une quelconque des revendications précédentes, **caractérisé en ce que** l'augmentation de la tension de traction s'effectue par étapes, et **en ce qu'**après chaque augmentation, la demande en courant du moteur d'entraînement (4) est mesurée et évaluée pour savoir si elle a augmenté.

8. Procédé selon l'une quelconque des revendications précédentes, **caractérisé en ce que** la réduction de la tension de traction s'effectue par étapes, et **en ce qu'**après chaque réduction, la demande en courant du moteur d'entraînement (4) est mesurée et évaluée pour savoir si elle a diminué.

9. Procédé selon l'une quelconque des revendications précédentes, **caractérisé en ce que** l'augmentation et/ou la réduction de la tension de traction s'effectue manuellement ou à l'aide d'un dispositif de serrage (5) du dispositif de tamisage (2) qui est actionné à l'aide d'une commande (6) du dispositif de tamisage (2) automatiquement et en fonction de la demande en courant respectivement mesurée.

10. Procédé selon la revendication précédente, **caractérisé en ce que** le procédé de réglage de la tension de traction est exécuté automatiquement à intervalles de temps définis par la commande (6) et à l'aide du dispositif de serrage (5), et/ou **en ce que** le procédé est initié manuellement par un opérateur.

11. Dispositif de tamisage (2) servant à séparer et à évacuer des impuretés (17) d'eau résiduaire (3), le dispositif de tamisage (2) comprenant au moins deux éléments d'entraînement (1) sans fin et disposés à distance l'un de l'autre qui peuvent être déplacés sur une trajectoire pendant le fonctionnement du dispositif de tamisage (2) à l'aide d'au moins un moteur d'entraînement (4) du dispositif de tamisage (2), **caractérisé en ce que** le dispositif de tamisage (2) comprend une commande (6) qui est réalisée pour évaluer la demande en courant du moteur d'entraînement (4) pour savoir si elle augmente d'une manière prédéfinie lorsque la tension de traction est augmentée et/ou si elle diminue d'une manière prédéfinie lorsque la tension de traction est réduite, afin de pouvoir régler la tension de traction selon l'une quelconque des revendications précédentes.

12. Dispositif de tamisage (2) selon la revendication précédente, **caractérisé en ce que** le dispositif de tamisage (2) présente au moins un système de tamisage avec des composants mobiles (11 ; 12) servant à éliminer des impuretés (17) de l'eau résiduaire (3), les composants mobiles (11 ; 12) étant en liaison avec les deux éléments d'entraînement (1) de sorte qu'ils sont déplacés conjointement avec les éléments d'entraînement (1) le long de la trajectoire lorsque les éléments d'entraînement (1) sont déplacés à l'aide du moteur d'entraînement (4).

13. Dispositif de tamisage (2) selon l'une quelconque des revendications de dispositif précédentes, **caractérisé en ce que** le dispositif de tamisage (2) présente une unité de signalisation (8) à l'aide de laquelle il peut être signalé à un opérateur du dispositif de tamisage (2) que la demande en courant du moteur d'entraînement (4) a augmenté d'une manière prédéfinie après que la tension de traction a été augmentée et/ou que la demande en courant du moteur d'entraînement (4) a diminué d'une manière prédéfinie après que la tension de traction a été réduite.

14. Dispositif de tamisage (2) selon l'une quelconque des revendications de dispositif précédentes, **caractérisé en ce que** le dispositif de tamisage (2) présente un dispositif de serrage (5) qui est réalisé pour augmenter ou réduire la tension de traction des éléments d'entraînement (1).

15. Dispositif de tamisage (2) selon la revendication précédente, **caractérisé en ce que** le dispositif de serrage (5) est en liaison fonctionnelle avec la commande (6), la commande (6) étant réalisée pour augmenter la tension de traction par actionnement du dispositif de serrage (5) dans le cadre du réglage de la tension de traction jusqu'à ce que la demande en courant du moteur d'entraînement (4) augmente d'une manière prédéfinie, et la commande (6) étant réalisée pour réduire ensuite la tension de traction par actionnement du dispositif de serrage (5) jusqu'à ce que la demande en courant diminue à nouveau d'une manière prédéfinie.
